# EUROPÄISCHE PATENTSCHRIFT

(11) **EP 1 135 627 B1**
(45) Veröffentlichungstag und Bekanntmachung des Hinweises auf die Patenterteilung: **07.09.2005**
(21) Anmeldenummer: 00972605.0
(22) Anmeldetag: 29.09.2000
(51) Int. Cl.: F16F 13/14

(54) **HYDRAULISCH DÄMPFENDES GUMMILAGER MIT ENTKOPPLUNGSELEMENT**
HYDRAULICALLY DAMPING RUBBER BEARING WITH A DECOUPLING ELEMENT
PALIER EN GOMME A AMORTISSEMENT HYDRAULIQUE AVEC ELEMENT DE DECOUPLAGE

(30) Priorität: 06.10.1999 DE 19948307
(43) Veröffentlichungstag der Anmeldung: 26.09.2001
(73) Patentinhaber: ZF Lemförder Metallwaren AG, 49441 Lemförde (DE)
(72) Erfinder: VOSSEL, Andreas, 49086 Osnabrück (DE); MEYERINK, Frank, 49393 Lohne (DE)
(86) Internationale Anmeldenummer: PCT/DE2000/003450
(87) Internationale Veröffentlichungsnummer: WO 2001/025650

(56) Entgegenhaltungen:
- JP-A- 6 002 734
- US-A- 5 035 407
- PATENT ABSTRACTS OF JAPAN vol. 33 (M-638), 4. November 1987 (1987-11-04) & JP 62 118132 A (BRIDGESTONE CORP), 29. Mai 1987 (1987-05-29)

## Beschreibung

Die Erfindung betrifft ein hydraulisch dämpfendes Gummilager mit einem Entkopplungselement zur Entkopplung der Dämpfungswirkung des Gummilagers gegenüber radial in das Lager eingetragenen Kräften mit geringer Erregeramplitude.

Gummilager werden insbesondere im Fahrzeugbau in unterschiedlichsten Formen und zu unterschiedlichsten Zwecken eingesetzt. Der Einsatz erfolgt zum Beispiel im Bereich der Fahrzeugachsen oder auch bei der Lagerung des Fahrzeugaggregates. Üblicherweise bestehen die Lager aus einem zylinderförmigen Innenteil, welches zumindest abschnittsweise von einem Elastomer umgeben und mit diesem durch Vulkanisation verbunden ist. Die vorgenannten Teile werden schließlich durch eine ebenfalls zylindrische Außenhülse aufgenommen. Zur Unterstützung der Dämpfungswirkung sind die Lager für bestimmte Einsatzzwecke als hydraulisch dämpfende Lager ausgebildet, wobei in dem Elastomer Kammern für die Aufnahme eines Dämpfungsmittels vorgesehen und diese Kammern durch einen die Zirkulation des Dämpfungsmittels ermöglichenden Kanal miteinander verbunden sind. Durch das Hin- und Herschwingen des Dämpfungsmittels im Kanal wird dabei eine Massedämpfung bewirkt.

Ein Problem derartiger Lager besteht darin, daß ihre ständige dynamische Belastung zu einer unerwünschten Verhärtung des Lagers und damit zu einer stärkeren Übertragung des Körperschalls in den Innenraum eines Fahrzeuges führt. Zudem führen Kräfte die in Form periodisch wiederkehrender Stoßbelastungen, beispielsweise als Schwingungen mit kleinerer Amplitude auftreten, innerhalb bestimmter Frequenzbereiche ebenfalls zu unerwünschten akustischen Beeinträchtigungen. Man ist daher bemüht, die Dämpfungswirkung der Lager gegenüber solchen Schwingungen zu entkoppeln. Zu diesem Zweck ist es bekannt geworden, hydraulisch dämpfende Lager mit einem Entkopplungsglied bzw. -element zu versehen.

Eine hierfür eingesetzte Lösung sieht dafür unter anderem eine besondere Gestaltung des in den Elastomer eingeschlossenen Käfigs vor. Gemäß der Lösung sind abschnittsweise an der Außenkontur des Käfigs radial aufragende, in axialer Richtung verlaufende Stege vorgesehen, welche auch durch den zur Zirkulation der Dämpfungsflüssigkeit dienenden Kanal verlaufen. Um die Zirkulation des Fluids weiterhin zu gewährleisten, sind diese Stege mehrfach durchbrochen. Zwischen die Stege wird ein flatterfähiges Einlegeteil eingefügt. Durch das Einlegeteil wird der Durchfluß für das Dämpfungsmittel im Kanal beim Auftreten von schwingungsförmigen Belastungen kleiner Amplitude kurzzeitig zur Erreichung eines sofortigen Druckausgleichs zwischen den Dämpfungsmittelkammern freigegeben. Der Druckausgleich erfolgt dabei ohne das Fließen nennenswerter Volumenströme des Dämpfungsmittels. Das sich über nahezu die gesamte axiale Länge des Lagers erstreckende streifenförmige Einlegeteil ist dabei zwischen den Stegen so eingeordnet, daß es vergleichbar einer Gummilippe in radialer Richtung aufragt.

Bei dieser Lösung ist insbesondere der sich deutlich erhöhende Montageaufwand für das Lager als nachteilig anzusehen. Zudem benötigt das Entkopplungselement im Hinblick auf den Abstand zwischen dem Gummiblock mit Käfig und der Außenhülse relativ viel Platz. Die auf diese Weise wirksam zu entkoppelnden Amplituden sind aufgrund vergleichsweise langer tangentialer Wege des sich zwischen den am Käfig ausgebildeten Stegen bewegenden Einlegeteils auf einen engen Bereich begrenzt.

Aus der US 5 035 407 ist ein gattungsbildendes Lager mit hydraulischer Dämpfung bekannt, das zwei Dämpfungskanäle für unterschiedliche Schwingungen aufweist. In einem der Dämpfungskanäle befindet sich ein Element zur Kontrolle des Flüssigkeitsstromes in diesem Kanal, das die Bewegung der Flüssigkeit in diesem Kanal bei Auftreten von Schwingungen, die in dem anderen Kanal gedämpft werden, verhindert.

Über die Formgebung des in das Kontrollelement eingesetzten Elastomerkörpers kann der Bereich der auskoppelbaren Schwingungen nur begrenzt beeinflusst werden.

Aufgabe der vorliegenden Erfindung ist es, ein hydraulisch dämpfendes Gummilager mit einem Entkopplungselement zu schaffen, welches bei einfacher Montierbarkeit des Lagers ein hohes Maß an Flexibilität im Hinblick auf den Bereich der entkoppelbaren Amplituden besitzt.

Die Aufgabe wird erfindungsgemäß durch ein Lager mit den Merkmalen des Hauptanspruchs gelöst. Vorteilhafte Ausgestaltungen bzw. Weiterbildungen.der Erfindung sind durch die Unteransprüche angegeben.

Ein Ausführungsbeispiel des der Erfindung zu Grunde liegenden Lagers besteht in an sich bekannter Weise aus einem zylinderförmigen Innenteil, einem mit diesem Innenteil durch Vulkanistion verbundenen Elastomer und einer das Innenteil und den Elastomer aufnehmenden Außenhülse. Zum Erhalt der hydraulischen Dämpfungswirkung sind in dem Elastomer Kammern für ein Dämpfungsmittel vorgesehen, welches über mindestens einen in einem Kanalträger ausgebildeten, die Kammern miteinander verbindenden Kanal zirkulieren kann. Zur Lösung der Aufgabe ist das Entkopplungselement als ein in eine hierfür vorgesehene Ausnehmung einzufügendes separates Bauteil ausgebildet. Dabei besteht das Entkopplungselement aus einem rahmenförmigen Gehäuse und einer in dem Gehäuse frei schwingend fixierten Membran. Das Entkopplungselement und die im Kanalträger für das Element vorgesehene Aufnahme sind so ausgebildet, daß die Membran des in das Lager eingeordneten Bauteils zwischen dem Kanalträger und der Außenhülse eine radial gerichtete Bewegung ausführen kann.

Die erfindungsgemäße Ausbildung des Lagers bringt mehrere Vorteile mit sich. Das als vormontiertes separates Bauteil ausgeführte Entkopplungselement ist im Zuge der Fertigung des Lagers leicht zu montieren. Gleichzeitig kann das Lager durch die Wahl geometrisch unterschiedlich gestalteter Entkopplungselemente hinsichtlich seiner Charakteristik ohne großen Aufwand flexibel ausgelegt werden. Insbesondere durch die Dicke der Membran des Entkopplungselementes kann dabei sehr leicht auf die entkoppelbare Flüssigkeitsmenge und damit auf die entkoppelbaren Amplituden bzw. Frequenzen auftretender Belastungen Einfluß genommen werden. Dadurch, daß die Entkopplung durch eine radiale Bewegung einer nur dünnen Membran gesteuert wird, ist zudem der Platzbedarf für den Einsatz des Entkopplungselementes zwischen dem Kanalträger und der Außenhülse des Lagers sehr gering. Die zwar je nach Einstellung unterschiedliche, aber dennoch stets geringe Dicke der Membran bedingt eine geringe Trägheit der Anordnung bei auftretenden dynamischen Vorgängen.

Entsprechend einer möglichen Ausbildung der Erfindung verläuft die Ausnehmung zur Aufnahme des Entkopplungselementes parallel zu den oder dem zur Zirkulation des Dämpfungsmittels zwischen den Kammern vorgesehenen Kanälen. In jedem Falle besteht aber über die das Entkopplungsglied aufnehmende Ausnehmung im Kanalträger eine zusätzliche Verbindung zwischen den Dämpfungsmittelkammern, über welche beim Auftreten kleinerer Erregeramplituden und einer hierdurch verursachten radial gerichteten Bewegung der Membran des Kopplungselementes ein unmittelbarer Druckausgleich, ohne das Fließen einer nennenswerten Menge von Dämpfungsmittel, erfolgen kann. Dabei sollen unter kleinen Erregeramplituden Krafteinwirkungen verstanden werden, die zu einer radialen Einfederung des Lagers von etwa 0,1 mm oder weniger führen.

Gemäß einer vorteilhaften Ausgestaltung des Lagers weist das rahmenförmige Gehäuse des Entkopplungselementes mindestens eine Ausnehmung auf, mittels welcher das Bauteil an einem zu diesem Zweck im Bereich seiner Aufnahme vorgesehenen Nocken in dem fertigmontierten Lager hinsichtlich seiner Lage fixiert ist. Diese Ausnehmung im Gehäuse des Entkopplungselementes kann beispielsweise in Form einer auf dem Umfang des rahmenförmigen Gehäuses eingearbeiteten Kerbe realisiert sein. Durch die Möglichkeit einer Lagefixierung des gesamten Entkopplungselementes an dem Kanalträger erhöht sich die Montagefreundlichkeit des Lagers zusätzlich

Bei einer besonders vorteilhaften Weiterbildung weist die Membran des Entkopplungselementes auf ihrer Oberfläche beidseitig mindestens einen als Abstandshalter gegenüber der Außenhülse und dem Kanalträger wirkenden Noppen auf. Hiermit wird, insbesondere bei Lagern mit größerem Gummiquerschnitt und der damit verbundenen größeren Länge der Membran des Entkopplungselementes, ein ungewolltes Durchhängen der Membran verhindert. Auch ist durch Form, Anzahl und Art der Anordnung der Noppen eine weitere Einstellmöglichkeit für das Entkopplungsverhalten gegeben. Das Schwingungsverhalten der Membran, und damit auch das Entkopplungsverhalten des Elementes, können aber in ähnlicher Weise auch beeinflußt werden, indem man die Membran nicht plan, sondern zum Beispiel gänzlich oder abschnittsweise gewellt bzw. in vergleichbarer Weise strukturiert ausbildet.

Das Gehäuse des Entkopplungselementes kann gemäß einer möglichen Ausbildung der Erfindung aus zwei Rahmenelementen gebildet sein, zwischen denen die Membran fixiert ist. Zur Fixierung der Membran zwischen den Gehäuseteilen sind unterschiedliche Möglichkeiten denkbar. So kann das Zusammenfügen der Rahmenteile und das damit verbundene Einklemmen der Membran durch die Rahmenteile zusammenhaltende Klippverschlüsse realisiert werden, die entweder an einer oder an beiden Gehäusehälften ausgebildet sind. Diese Ausbildung läßt sich besonders montagefreundlich dadurch weiterbilden, daß die Rahmenteile an einer Seite durch Scharniere verbunden und die Fixierung der Membran durch Aufeinanderklappen der Teile und Einrasten mittels des oder der Klippverschlüsse erfolgt.

Es ist aber auch denkbar, die Membran durch eine einfache Klemmung zwischen den rahmenförmigen Gehäuseteilen zu befestigen. Schließlich ist es aber auch denkbar, das Gehäuse als einteiliges Rahmenelement auszubilden und die Membran, sofern sie aus Gummi besteht, auf dem Rahmen dieses Elementes durch Vulkanisation zu fixieren. Für das Gehäuse können, unabhängig davon, ob dieses einteilig oder zweiteilig ausgebildet ist, unterschiedliche Materialien, beispielsweise Kunststoff oder Metall, verwendet werden. Auch ist es denkbar, das Gehäuse und die Membran aus zwei unterschiedlichen Kunststoffen im Wege eines Zwei-Komponenten-Verfahrens unter Einsatz der Spritztechnik zu fertigen.

Die Erfindung soll nachfolgend anhand eines Ausführungsbeispieles näher erläutert werden. In den zugehörigen Zeichnungen zeigen:
- Figur 1a, 1b:: Das als separates Bauteil gestaltete Entkopplungselement,
- Figur 2:: Das Entkopplungselement in einer Vorderansicht,
- Figur 3:: Das Entkopplungselement in einer Schnittdarstellung mit Schnitt entlang der Linie A-A in der Figur 2,
- Figur 4:: Das Entkopplungselement in einer Schnittdarstellung mit einem Schnitt entlang der Linie C-C in der Figur3,
- Figur 5:: Das hydraulisch dämpfende Lager mit der Aufnahme für das Entkopplungselement.

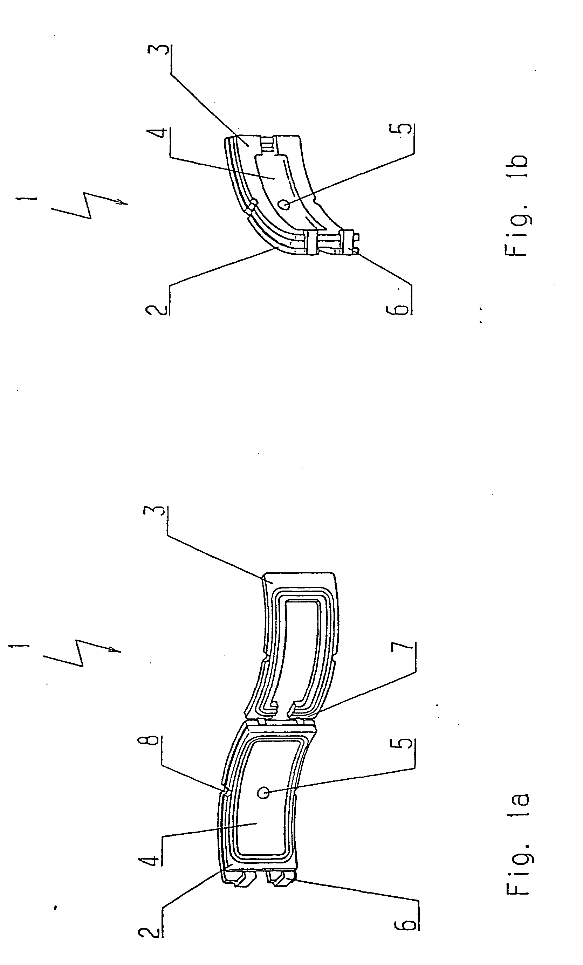

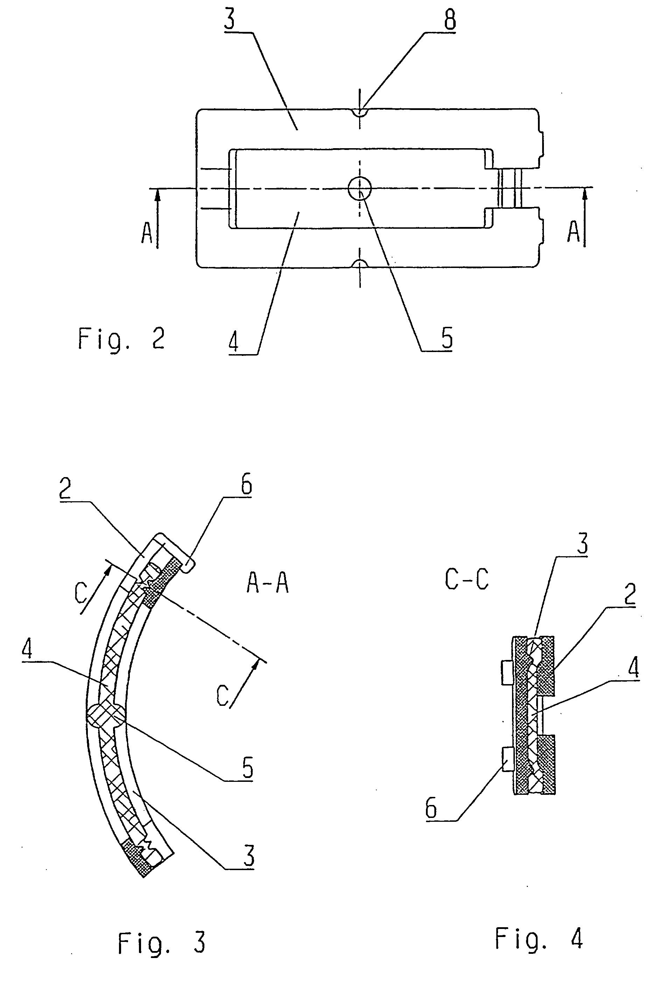

Die Figuren 1a und 1b zeigen das Entkopplungselement 1 des erfindungsgemäßen Lagers, welches, wie zu erkennen, als separates Bauteil ausgebildet ist. In dem dargestellten Beispiel ist das Gehäuse 2, 3 des Entkopplungselementes 1 aus zwei mittels eines Scharniers 7 verbundenen rahmenförmigen Elementen gebildet, durch deren Aufeinanderklappen zwischen ihnen eine Membran 4 fixiert wird. Die Membran 4 besteht vorzugsweise aus einem Elastomer. Nach dem Aufeinanderklappen der Rahmenteile 2, 3 werden diese durch einen hierfür vorgesehenen Klippverschluß 6 zusammengehalten und fixieren somit die Membran 4 zwischen sich. Zusätzlich kann die Membran 4 auch noch durch Vulkanisation mit den Gehäuseteilen 2, 3 verbunden sein. Auf der Oberfläche der Membran 4 ist ein Noppen 5 vorgesehen, dessen Funktion im Zusammenhang mit den Erläuterungen zur Figur 3 näher erklärt werden soll. Die rahmenförmigen Gehäuseteile 2, 3 des Entkopplungselementes 1, welche aus Kunststoff oder einem Hartmetall bestehen, weisen jeweils in der Mitte ihrer Längsseiten eine Einkerbung 8 auf. Mittels dieser Einkerbung 8 wird das Entkopplungselement 1 bei der Montage des Lagers an einem hierfür in der Ausnehmung 13 zur Aufnahme des Entkopplungselementes 1 ausgebildeten Nocken fixiert.

Die Figur 2 veranschaulicht nochmals die Ausbildung des Entkopplungselementes 1 in einer Vorderansicht. In der Darstellung sind die Rahmenteile 2, 3 aufeinander geklappt und die Membran 4 ist durch schließen der Klippverschlüsse 6 zwischen ihnen fixiert.

Die besondere Funktion des bereits in der Figur 1 erkennbaren Noppens 5 auf der Oberfläche der Membran 4 wird durch die in der Figur 3 gegebene Darstellung nochmals verdeutlicht. Bei der Darstellung der Figur 3 handelt es sich um eine Schnittdarstellung, bei welcher der Schnitt entlang der Linie A-A gemäß der Figur 2 geführt wurde. Aus der Abbildung ist zu ersehen, daß auf beiden Seiten der Membranoberfläche jeweils ein Noppen 5 ausgebildet ist. Dieser Noppen 5 dient als Abstandshalter zur äußeren Lagerhülse 14 (auf der Seite des äußeren Krümmungsradius) bzw. zu dem Kanalträger 11 mit der darin ausgebildeten Aufnahme 13 (auf der Seite des inneren Krümmungsradius). Insbesondere bei Lagern größeren Querschnitts bei denen das Entkopplungselement 1, welches ja die einander gegenüberliegenden Dämpfungskammern miteinander verbindet, eine gewisse Länge aufweist, wird durch diese Abstandshalter ein Durchhängen der Membran 4 verhindert. Neben der Variation der Dicke der Membran 4 kann durch die Anzahl der Abstandshalter sowie durch die Art ihrer Anordnung oder durch ihre Formgebung ebenfalls auf die entkoppelbare Flüssigkeitsmenge Einfluß genommen werden.

In der Figur 4 ist das Entkopplungselement 1 nochmals in einer Schnittdarstellung bei einem längs der Linie C-C der Figur 3 geführten Schnitt dargestellt. Zu erkennen sind neben den Rahmenteilen 2, 3 die zwischen ihnen eingeklemmte Membran 4 sowie die Klippverschlüsse 6 zum Verschließen des Gehäuses 2, 3.

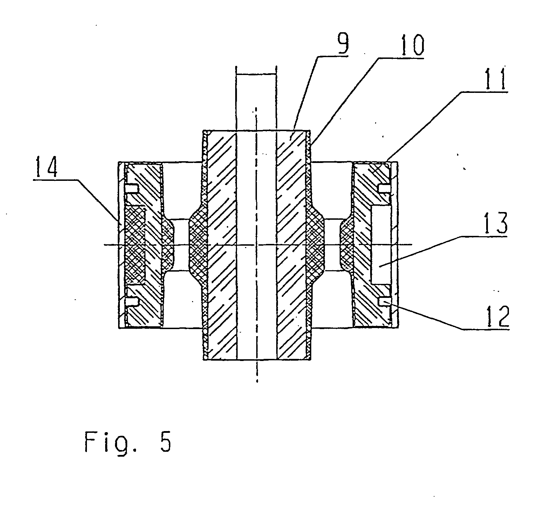

Die Darstellung der Figur 5 zeigt den grundsätzlichen Aufbau des hydraulisch dämpfenden Lagers unter Verdeutlichung der in den Kanalträger 11 zur Aufnahme des Entkopplungselementes 1 ausgebildeten Ausnehmung 13. Das Lager besteht in an sich bekannter Weise aus der zylindrischen Innenhülse 9, dem mit der Innenhülse verbundenen Elastomer 10, einem beide Teile umgebenden Kanalträger 11, dessen darin eingearbeitete Kanäle 12 die in der Darstellung nicht erkennbaren Kammern zur Aufnahme des Dämpfungsmittels miteinander verbinden sowie aus einer alle vorgenannten Teile aufnehmenden äußeren Lagerhülse 14. Abweichend zu der aus dem Stand der Technik bekannten Ausbildung eines solchen Lagers ist bei dem erfindungsgemäßen Lager in den Kanalträger 11 eine Ausnehmung 13 zur Aufnahme des Entkopplungselementes 1 ausgebildet, welche die Dämpfungsmittelkammern ebenfalls miteinander verbindet. Die Figur zeigt das Lager in einer Schnittdarstellung (axialer Schnitt) ohne Einfügung des Entkopplungselementes 1. Durch das später einzufügende Entkopplungselement 1 wird beim Auftreten von Belastungen mit geringer Erregeramplitude ein sofortiger Druckausgleich zwischen den Dämpfungsmittelkammern in der Weise ermöglicht, daß die zwischen den Gehäuseteilen 2, 3 des Entkopplungselementes 1 frei schwingend fixierte Membran 4 auf Grund der einwirkenden Kräfte eine radiale Bewegung in Richtung des Kanalträgers 11 oder der Außenhülse 14 ausführt. Hierdurch wird der Druckausgleich über die in Form der Ausnehmung 13 geschaffene Verbindung der Dämpfungsmittelkammern ermöglicht, ohne daß in den vollständig freien Dämpfungsmittelkanälen 12 ein nennenswerter Volumenstrom des Dämpfungsmittels zirkuliert. Erst bei größeren Amplituden erfolgt eine nennenswerte Bewegung des Dämpfungsmittels zwischen den Kammern durch die Kanäle 12, wodurch der Effekt der Massendämpfung entsteht. Der Grad der Entkopplung der Dämpfungswirkung im Hinblick auf die Amplitude der einwirkenden Kräfte ist, wie bereits erläutert, durch die spezielle Gestaltung des Lagers insbesondere abhängig von der Dicke der Membran 4 des Entkopplungselementes 1. Je nach Ausbildung der Membran 4 werden Erregeramplituden, die eine radiale Einfederung des Lager von bis zu 0,1 mm bewirken, besonders wirksam entkoppelt. Eine Entkopplungswirkung kann aber bei geeigneter Dimensionierung des Entkopplungselementes 1 auch für Erregeramplituden mit einer geringfügig stärkeren Einfederung des Lagers erreicht werden.

### Liste der verwendeten Bezugszeichen

- 1: Entkopplungselement
- 2: Gehäuse, Rahmenteil
- 3: Gehäuse, Rahmenteil
- 4: Membran
- 5: Noppen
- 6: Klippverschluß
- 7: Scharnier
- 8: Ausnehmung
- 9: Innenteil
- 10: Elastomer
- 11: Kanalträger
- 12: Kanal
- 13: Ausnehmung
- 14: Außenhülse

## Patentansprüche

1. Hydraulisch dämpfendes Gummilager mit Entkopplungselement (1), dessen zwischen einem im wesentlichen zylinderförmigen Innenteil (9) und einer zylindrischen Außenhülse (14) eingeordneter und mit dem Innenteil (9) durch Vulkanisation verbundener Elastomer (10) durch mindestens einen, in einem Kanalträger (11) angeordneten Kanal (12) verbundene Kammern zur Aufnahme eines Dämpfungsmittels aufweist, wobei das Entkopplungselement (1) zur Entkopplung der durch das Zirkulieren des Dämpfungsmittels in dem oder den Kanälen (12) hervorgerufenen Dämpfungswirkung gegenüber radial in das Lager eingetragenen Kräften mit geringer Erregeramplitude vorgesehen ist, wobei das Entkopplungselement (1) als ein separates, in eine Ausnehmung (13) im Kanalträger (12) des Lagers einzuordnendes Bauteil mit einem rahmenförmigen Gehäuse (2, 3) ausgebildet ist, **dadurch gekennzeichnet, daß** das Entkopplungselement (1) eine in oder an dem Gehäuse (2, 3) frei schwingend fixierte Membran (4) aufweist, der zwischen dem Kanalträger (11) und der Außenhülse (14) des Lagers ein radialer Abstand zugeordnet ist, so daß eine radial gerichtete Bewegung der Membran (4) möglich ist.

2. Hydraulisch dämpfendes Gummilager mit Entkopplungselement (1) nach Anspruch 1, **dadurch gekennzeichnet, daß** die Ausnehmung (13) zur Aufnahme des Entkopplungselementes (1) äquidistant oder parallel zu dem oder den zur Zirkulation des Dämpfungsmittels zwischen den Kammern vorgesehenen Kanälen (12) verläuft.

3. Hydraulisch dämpfendes Gummilager mit Entkopplungselement (1) nach Anspruch 1 oder 2, **dadurch gekennzeichnet, daß** das rahmenförmige Gehäuse (2, 3) des Entkopplungselementes (1) mindestens eine Ausnehmung (8) aufweist, mittels welcher das in das Lager eingeordnete Entkopplungselement (1) an einem Nocken fixiert ist, der zu diesem Zweck im Bereich der Ausnehmung (13) vorhanden ist.

4. Hydraulisch dämpfendes Gummilager mit Entkopplungselement (1) nach Anspruch 3, **dadurch gekennzeichnet, daß** das Entkopplungselement (1) zu seiner Fixierung an dem dafür vorgesehenen Nocken auf dem Umfang seines rahmenförmigen Gehäuses (2, 3) mindestens eine Kerbe (8) aufweist.

5. Hydraulisch dämpfendes Gummilager mit Entkopplungselement (1) nach einem der Ansprüche 1 bis 4, **dadurch gekennzeichnet, daß** die Membran (4) des Entkopplungselementes (1) auf ihrer Oberfläche beiderseitig mindestens einen als Abstandshalter gegenüber der Außenhülse (14) und dem Kanalträger (11) wirkenden Noppen (5) aufweist.

6. Hydraulisch dämpfendes Gummilager mit Entkopplungselement (1) nach einem der Ansprüche 1 bis 5, **dadurch gekennzeichnet, daß** das rahmenförmige Gehäuse (2, 3) des Entkopplungselementes (1) aus einem ersten (2) und einem zweiten Rahmenteil (3) besteht, zwischen denen die Membran (4) fixiert ist.

7. Hydraulisch dämpfendes Gummilager mit Entkopplungselement (1) nach Anspruch 6, **dadurch gekennzeichnet, daß** die die Membran (4) fixierenden Rahmenteile (2, 3) nach der Montage des Lagers durch einen oder mehrere an mindestens einem Rahmenteil (2) ausgebildete Klippverschlüsse (6) zusammengehalten werden.

8. Hydraulisch dämpfendes Gummilager mit Entkopplungselement (1) nach Anspruch 6 oder 7, **dadurch gekennzeichnet, daß** die das rahmenförmige Gehäuse des Entkopplungselementes (1) bildenden Rahmenteile (2, 3) an mindestens einer Seite durch mindestens ein Scharnier (7) miteinander verbunden sind.

9. Hydraulisch dämpfendes Gummilager mit Entkopplungselement (1) nach Anspruch 6, **dadurch gekennzeichnet, daß** die Membran (4) zwischen den Rahmenteilen (2, 3) des Gehäuses fixiert ist, indem die Rahmenteile (2, 3) ineinander verklemmt sind.

10. Hydraulisch dämpfendes Gummilager mit Entkopplungselement (1) nach einem der Ansprüche 1 bis 9, **dadurch gekennzeichnet, daß** die durch das Entkopplungselement (1) verursachte Entkopplungswirkung im Hinblick auf die Geometrie des Lagers und/oder auf die bei seinem Einsatz zu erwartenden Belastungen in Abhängigkeit von der Dicke der Membran (4) variabel ist.

11. Hydraulisch dämpfendes Gummilager mit Entkopplungselement (1) nach einem der Ansprüche 1 bis 10, **dadurch gekennzeichnet, daß** die Membran (4) des Entkopplungselementes (1) aus einem Elastomer und sein Gehäuse (2, 3) aus Kunststoff oder einem Hartmetall besteht.

12. Hydraulisch dämpfendes Gummilager mit Entkopplungselement (1) nach einem der Ansprüche 1 bis 10, **dadurch gekennzeichnet, daß** die Membran (4) und das Gehäuse (2, 3) aus unterschiedlichen, in einem Zwei-Komponenten-Verfahren gespritzten, Kunststoffen bestehen.

## Claims

1. Rubber bearing which effects damping hydraulically and has a decoupling element (1), the elastomer (10) of which bearing, which elastomer is incorporated between a substantially cylindrical inner part (9) and a cylindrical outer sleeve (14) and is connected to said inner part (9) by vulcanisation, has chambers for receiving a damping medium which are connected by at least one duct (12) which is disposed in a duct-carrier (11), wherein said decoupling element (1) is provided for the purpose of decoupling the damping action, which is brought about by the circulation of the damping medium in the duct or ducts (12), in relation to forces with low exciting amplitude which are fed into the bearing, and wherein said decoupling element (1) is constructed as a separate component which is to be incorporated in a clearance (13) in the duct-carrier (12) of the bearing and has a frame-shaped housing (2, 3),
**characterised in that** the decoupling element (1) has a diaphragm (4) which is fixed in position in or on the housing (2, 3) in a freely oscillating manner and with which a radial distance between the duct-carrier (11) and the outer sleeve (14) of the bearing is associated, so that a radially directed movement of said diaphragm (4) is possible.

2. Rubber bearing which effects damping hydraulically and has a decoupling element (1), in accordance with claim 1,
**characterised in that** the clearance (13) for receiving the decoupling element (1) extends equidistantly from, or parallel to, the duct or ducts (12) provided for the circulation of the damping medium between the chambers.

3. Rubber bearing which effects damping hydraulically and has a decoupling element (1), in accordance with claim 1 or 2,
**characterised in that** the frame-shaped housing (2, 3) of the decoupling element (1) has at least one clearance (8) by means of which the decoupling element (1) incorporated in the bearing is fixed in position on a cam which is present, for this purpose, in the region of the clearance (13).

4. Rubber bearing which effects damping hydraulically and has a decoupling element (1), in accordance with claim 3,
**characterised in that** the decoupling element (1) has, for the purpose of fixing it in position on the cam provided for that purpose, at least one notch (8) on the periphery of its frame-shaped housing (2, 3).

5. Rubber bearing which effects damping hydraulically and has a decoupling element (1), in accordance with one of claims 1 to 4,
**characterised in that** the diaphragm (4) of the decoupling element (1) has, on its surface on both sides, at least one knob (5) which acts as a piece for maintaining a distance in relation to the outer sleeve (14) and the duct-carrier (11).

6. Rubber bearing which effects damping hydraulically and has a decoupling element (1), in accordance with one of claims 1 to 5,
**characterised in that** the frame-shaped housing (2, 3) of the decoupling element (1) consists of a first (2) and a second (3) part of the frame, between which parts the diaphragm (4) is fixed in position.

7. Rubber bearing which effects damping hydraulically and has a decoupling element (1), in accordance with claim 6,
**characterised in that** the parts (2, 3) of the frame which fix the diaphragm (4) in position are held together, after assembly of the bearing, by one or more clip-type fasteners (6) which are constructed on at least one part (2) of the frame.

8. Rubber bearing which effects damping hydraulically and has a decoupling element (1), in accordance with claim 6 or 7,
**characterised in that** the parts (2, 3) of the frame which form the frame-shaped housing of the decoupling element (1) are connected to one another on at least one side by at least one hinge (7).

9. Rubber bearing which effects damping hydraulically and has a decoupling element (1), in accordance with claim 6,
**characterised in that** the diaphragm (4) is fixed in position between the parts (2, 3) of the frame of the housing through the fact that said parts (2, 3) of the frame are clamped into one another.

10. Rubber bearing which effects damping hydraulically and has a decoupling element (1), in accordance with one of claims 1 to 9,
**characterised in that** the decoupling action caused by the decoupling element (1) can be varied, in dependence upon the thickness of the diaphragm (4), with respect to the geometry of the bearing and/or to the loadings to be anticipated in the course of its use.

11. Rubber bearing which effects damping hydraulically and has a decoupling element (1), in accordance with one of claims 1 to 10,
**characterised in that** the diaphragm (4) of the decoupling element (1) consists of an elastomer and its housing (2, 3) consists of plastic or of a hard metal.

12. Rubber bearing which effects damping hydraulically and has a decoupling element (1), in accordance with one of claims 1 to 10,
**characterised in that** the diaphragm (4) and the housing (2, 3) consist of different plastics which are injection-moulded in a two-component process.

## Revendications

1. Palier en caoutchouc réalisant un amortissement hydraulique, comportant un élément de découplage (1), dont un élastomère (10), inséré entre une partie intérieure de forme sensiblement cylindrique (9) et une douille extérieure cylindrique (14) et relié à la partie intérieure (9) par vulcanisation, comporte des chambres, qui sont reliées par au moins un canal (12) disposé dans un support de canal (11) et servent à loger un milieu d'amortissement, dans lequel l'élément de découplage (1) est prévu pour le découplage de l'action d'amortissement provoquée par la circulation du milieu d'amortissement dans le ou les canaux (12), par rapport à des forces introduites radialement dans le palier et présentant une faible amplitude d'excitation, et dans lequel l'élément de découplage (1) est agencé sous la forme d'un composant séparé, devant être inséré dans un évidement (13) situé dans le support de canal (12) du palier et comportant un boîtier en forme de cadre (2, 3), **caractérisé en ce que** l'élément de découplage (1) comporte une membrane (4) fixée de manière à osciller librement sur le boîtier (2, 3) et à laquelle est associée une distance radiale entre le support de canal (12) et la douille extérieure (14) du palier, de sorte qu'un déplacement dirigé radialement de la membrane (4) est possible.

2. Palier en caoutchouc réalisant un amortissement hydraulique, comportant un élément de découplage (1) selon la revendication 1, **caractérisé en ce que** l'évidement (13) servant à loger l'élément de découplage (1) est équidistant ou parallèle au canal ou aux canaux (12) prévus pour la circulation du milieu d'amortissement entre les chambres.

3. Palier en caoutchouc réalisant un amortissement hydraulique, comportant un élément de découplage (1) selon la revendication 1 ou 2, **caractérisé en ce que** le boîtier en forme de cadre (2, 3) de l'élément de découplage (1) comporte au moins un évidement (8), à l'aide duquel l'élément de découplage (1) disposé dans le palier est fixé à une came, qui est prévue à cet effet dans la zone de l'évidement (13).

4. Palier en caoutchouc réalisant un amortissement hydraulique, comportant un élément de découplage (1) selon la revendication 3, **caractérisé en ce que** l'élément de découplage (1) comporte, pour sa fixation à la came prévue à cet effet, au moins une encoche (8) sur la périphérie de son boîtier en forme de cadre (2, 3).

5. Palier en caoutchouc réalisant un amortissement hydraulique, comportant un élément de découplage (1) selon l'une des revendications 1 à 4, **caractérisé en ce que** la membrane (4) de l'élément de découplage (1) comporte des deux côtés, sur sa surface, au moins un ergot (5) agissant en tant qu'entretoise par rapport à la douille extérieure (14) et au support de canal (11).

6. Palier en caoutchouc réalisant un amortissement hydraulique, comportant un élément de découplage (1) selon l'une des revendications 1 à 5, **caractérisé en ce que** le boîtier en forme de cadre (2, 3) de l'élément de découplage (1) est constitué par une premier élément de cadre (2) et un second élément de cadre (3), entre lesquels la membrane (4) est fixée.

7. Palier en caoutchouc réalisant un amortissement hydraulique, comportant un élément de découplage (1) selon la revendication 6, **caractérisé en ce que** les éléments de cadre (2, 3), qui fixent la membrane (4), sont maintenus assemblés, après le montage du palier, par des systèmes de fermeture à encliquetage (6) formés au moins sur un élément de cadre (2).

8. Palier en caoutchouc réalisant un amortissement hydraulique, comportant un élément de découplage (1) selon la revendication 6 ou 7, **caractérisé en ce que** les éléments de cadre (2, 3) formant le boîtier en forme de cadre de l'élément de découplage (1) sont reliés entre eux sur au moins un côté par au moins une charnière (7).

9. Palier en caoutchouc réalisant un amortissement hydraulique, comportant un élément de découplage (1) selon la revendication 6, **caractérisé en ce que** la membrane (4) est fixée entre les éléments de cadre (2, 3) du boîtier par le fait que les éléments de cadre (2, 3) sont serrés l'un dans l'autre.

10. Palier en caoutchouc réalisant un amortissement hydraulique, comportant un élément de découplage (1) selon l'une des revendications 1 à 9, **caractérisé en ce que** l'action de découplage, qui est provoquée par l'élément de découplage (1), est variable en rapport avec la géométrie du palier et/ou avec les contraintes, auxquelles il faut s'attendre lors de son utilisation, en fonction de l'épaisseur de la membrane (4).

11. Palier en caoutchouc réalisant un amortissement hydraulique, comportant un élément de découplage (1) selon l'une des revendications 1 à 10, **caractérisé en ce que** la membrane (4) de l'élément de découplage (1) est constituée par un élastomère et que son boîtier (2, 3) est réalisé en une matière plastique ou en un métal dur.

12. Palier en caoutchouc réalisant un amortissement hydraulique, comportant un élément de découplage (1) selon l'une des revendications 1 à 10, **caractérisé en ce que** la membrane (4) et le boîtier (2, 3) sont réalisés avec différentes matières plastiques injectées selon un procédé à deux constituants.
